# EUROPÄISCHE PATENTSCHRIFT

(11) **EP 0 686 275 B1**
(45) Veröffentlichungstag und Bekanntmachung des Hinweises auf die Patenterteilung: **26.04.2000**
(21) Anmeldenummer: 95903757.3
(22) Anmeldetag: 16.12.1994
(51) Int. Cl.: G05B 19/042

(54) **STEUERGERÄT UND VORRICHTUNG ZU DESSEN PROGRAMMIERUNG**
CONTROL UNIT AND DEVICE FOR PROGRAMMING IT
UNITE DE COMMANDE ET DISPOSITIF POUR SA PROGRAMMATION

(30) Priorität: 29.12.1993 DE 4344866
(43) Veröffentlichungstag der Anmeldung: 13.12.1995
(73) Patentinhaber: ROBERT BOSCH GMBH, 70442 Stuttgart (DE)
(72) Erfinder: ZIMMERMANN, Jürgen, D-71665 Vaihingen (DE); GROTE, Walter, D-71706 Markgroeningen (DE)
(86) Internationale Anmeldenummer: DE9401515
(87) Internationale Veröffentlichungsnummer: WO9518404

(56) Entgegenhaltungen:
- EP-A- 0 155 403
- EP-A- 0 182 281
- EP-A- 0 266 704
- EP-A- 0 455 174
- DE-A- 3 432 130
- DE-A- 3 723 024

## Beschreibung

### Stand der Technik

Die Erfindung geht aus von einem Steuergerät nach der Gattung des Hauptanspruchs. Es ist schon ein Steuergerät und eine Vorrichtung zu dessen Programmierung aus der EP 0 266 704 A2 bekannt. Dabei ist zur Programmierung des nichtflüchtigen Speichers des Steuergerätes ein externes Programmiergerät vorgesehen. Das externe Programmiergerät ist über eine serielle Übertragungsleitung mit dem Steuergerät verbunden. Über diese serielle Übertragungsleitung werden die zu programmierenden Daten an das Steuergerät gesendet. Der Mikrocontroller des Steuergerätes übernimmt die Daten und programmiert diese dann in den zu programmierenden nichtflüchtigen Speicher. Dazu wird die nötige Programmierspannung über eine separate Verbindung zwischen Programmiergerät und Steuergerät zum Steuergerät gespeist. Es ist also beim Steuergerät ein gesonderter Eingangspin vorgesehen, an den die Programmierspannung von außen angelegt werden kann.

Es ist weiterhin bekannt, die Programmierspannung intern im Steuergerät zu erzeugen. Mit Hilfe von Steuerbefehlen, die über die serielle Übertragungsleitung zum Steuergerät gesendet werden, wird der Programmiervorgang eingeleitet. Hierbei ist nachteilig, daß aufgrund einer elektromagnetischen Störstrahlung der Programmablauf des Steuergerätes willkürlich verändert werden kann, so daß nicht gewährleistet ist, daß keine fälschliche Einleitung der Programmierung des nichtflüchtigen Speichers auftreten kann.

Aus der EP 455 174 A2 ist bereits ein Steuergerät bekannt, bei dem eine Programmierung eines Speichers im Steuergerät durch ein Programmiergerät erfolgt.

### Vorteile der Erfindung

Das erfindungsgemäße Steuergerät mit den kennzeichnenden Merkmalen des Hauptanspruchs hat demgegenüber den Vorteil, daß einerseits kein zusätzlicher Steuergeräte-Pin zur Freigabe der Programmierung beim Steuergerät vorgesehen sein muß und andererseits durch eine Störung des Programmablaufs des Steuergerätes keine willkürliche Einleitung der Programmierung des nichtflüchtigen Speichers des Steuergerätes ausgelöst werden kann. Die dazu benötigten Mittel sind besonders einfach ausgebildet.

Durch die in den Unteransprüchen aufgeführten Maßnahmen sind vorteilhafte Weiterbildungen und Verbesserungen des im Hauptanspruch angegebenen Steuergerätes möglich. Weiterhin werden die Vorteile der erfindungsgemäßen Vorrichtung zur Programmierung des erfindungsgemäßen Steuergerätes angegeben. Besonders vorteilhaft ist, daß das Freigabesignal für die Programmierung über einen Tiefpaß bestehend aus einem Widerstand und Kondensator von der seriellen Übertragungsleitung ausgekoppelt wird. Dadurch wird es möglich, daß das Freigabesignal auch während einer Datenübertragung weiterhin am Speicher anliegt und der Ablauf der Programmierung unabhängig von der Datenübertragung über die serielle Übertragungsleitung stattfinden kann. Ebenfalls vorteilhaft ist, daß nach dem Tiefpaß zwischen dem Kondensator und dem Programmierfreigabeeingang des nichtflüchtigen Speichers ein Widerstand gegen Masse geschaltet ist.

Die Maßnahmen des Anspruchs 5 sind vorteilhaft, wenn der nichtflüchtige Speicher eine höhere Spannung (z.B. 12 V) für den Programmiervorgang benötigt.

Weiterhin vorteilhaft ist, daß im Steuergerät ein Eingangswiderstand an die Übertragungsleitung geschaltet ist, der andererseits mit der Versorgungsspannungsleitung (Masse) verbunden ist. Dadurch wird erreicht, daß die Eingangsleitung ein definiertes Low-Potential hält, wenn die serielle Übertragungsleitung nicht an das Steuergerät angeschlossen ist. Eine Entriegelung des nichtflüchtigen Speichers während des Normalbetriebes des Steuergerätes, d.h. wenn an die Übertragungsleitung kein externes Programmiergerät angeschlossen ist, ist dadurch verhindert.

Es ist weiterhin vorteilhaft, daß die Zeitkonstante des Tiefpasses so groß gewählt ist, daß während der Übertragung eines Datenwortes der Kondensator nicht so weit entladen wird, daß das Freigabesignal für die Programmierung im Pegel unter einen vorbestimmten Minimalwert absinkt. Dadurch wird sichergestellt, daß das Freigabesignal auch während der Übertragung von Daten zum oder vom Steuergerät kontinuierlich anliegt, so daß der Programmiervorgang ungestört stattfinden kann.

Es ist weiterhin vorteilhaft, daß die Zeitkonstante des Tiefpasses so klein gewählt wird, daß der Kondensator in den zur Verfügung stehenden Phase zwischen den Übertragungen zweier Datenworte voll aufgeladen wird. Auch diese Maßnahme dient dazu, daß das Freigabesignal kontinuierlich am nichtflüchtigen Speicher anliegt, so daß auch während der Übertragung von Daten eine ungestörte Programmierung des nichtflüchtigen Speichers stattfinden kann.

Darüber hinaus ist es vorteilhaft, daß intern im Steuergerät ein Schmitt-Trigger in die Übertragungsleitung geschaltet ist. Durch den Schmitt-Trigger wird eine Signalaufbereitung der über die Übertragungsleitung empfangenen Signale durchgeführt. Insbesondere ist dadurch eine Pegelanpassung möglich und auch eine Regenerierung der Flankensteilheit.

Weiterhin vorteilhaft ist, daß vor dem Widerstand des Tiefpasses zur Auskopplung des Freigabesignals zur Programmierung eine Treiberstufe geschaltet ist. Die Treiberstufe dient zur Entlastung des Schmitt-Triggers sowie zur Entkopplung der Übertragungsleitung von der Leitung, die das Freigabesignal zum nichtflüchtigen Speicher überträgt.

Es ist weiterhin vorteilhaft, daß zwischen Schmitt-Trigger und Anschluß der Übertragungsleitung an den Mikrorechner des Steuergerätes ein Widerstand vorgesehen ist. Dieser Widerstand dient zur Strombegrenzung für den sehr unwahrscheinlichen Fall, daß der Mikrorechner den Anschluß, an den die Übertragungsleitung angeschlossen ist, durch einen Programmfehler oder durch ein Störsignal fälschlicherweise als Ausgang umkonfiguriert und über diesen Ausgang einen High-Pegel ausgibt. In diesem Fall wird durch den Widerstand eine Strombegrenzung erreicht, so daß der Ausgang des Schmitt-Triggers und damit das Freigabesignal für die Programmierung auf Low bleiben. Es ist somit sichergestellt, daß keine unerwünschte Entriegelung des nichtflüchtigen Speichers des Steuergerätes -ohne externe Freigabe der Programmierungauftreten kann.

Für die Vorrichtung zur Programmierung des nichtflüchtigen Speichers des erfindungsgemäßen Steuergerätes ist es vorteilhaft, daß für die Datenübertragung zwischen externen Programmiergerät und Steuergerät und für die Abgabe eines erforderlichen Programmierfreigabesignals nur der Anschluß für die serielle Übertragungsleitung erforderlich ist. Eine separate Leitung für das Programmierfreigabesignal ist nicht erforderlich.

Sehr vorteilhaft ist, daß intern im Programmiergerät Mittel vorgesehen sind, die bei Anschluß der seriellen Übertragungsleitung High-Potential an die Übertragungsleitung anlegen. Dadurch entspricht dem Ruhepotential der Übertragungsleitung High-Potential, so daß der Schaltungsaufwand zur Auskopplung des Programmierfreigabesignals beim Steuergerät gering gehalten werden kann.

### Zeichnung

Die Erfindung ist in der Zeichnung dargestellt und in der nachfolgenden Beschreibung näher erläutert. Es zeigen Figur 1 den Anschluß eines Programmiergerätes an ein Steuergerät; Figur 2 ein schematisches Schaltbild für die erfindungsgemäße Schaltungsanordnung im Steuergerät; Figur 3 ein schematisches Schaltbild für die erfindungsgemäße Schaltungsanordnung im Programmiergerät.

### Beschreibung der Erfindung

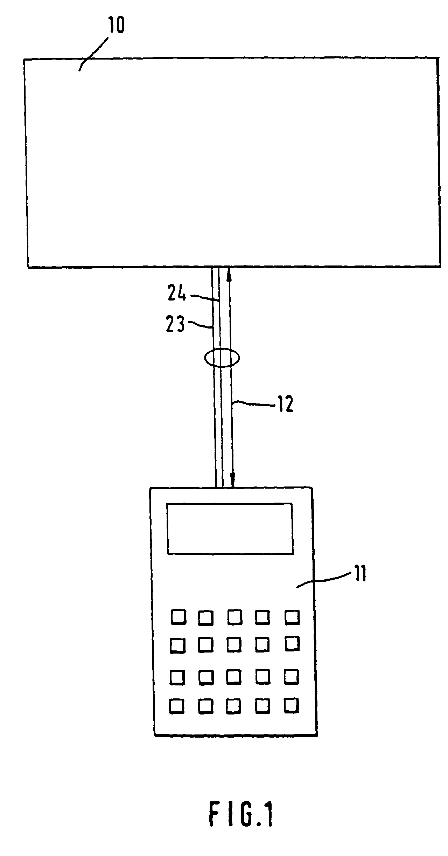

Figur 1 zeigt den Anschluß eines Steuergerätes 10 an ein externes Programmiergerät 11 über eine serielle Übertragungsleitung 12. Über die Verbindungsleitung 23 wird die Batteriespannung vom Steuergerät zum externen Programmiergerät gespeist. Über die Verbindungsleitung 24 wird die Masse des Steuergerätes 10 mit der Masse des Programmiergerätes 11 verbunden. Der Programmiervorgang des Steuergerätes 10 findet z.B. am Bandende der Produktion des Kraftfahrzeuges statt. Dabei ist das Steuergerät 10 schon in das Kraftfahrzeug eingebaut. Das Steuergerät kann ein Brems, Motor-, oder Getriebe-Steuergerät, etc. sein. Üblicherweise ist ein derartiges Steuergerät über einen Diagnose-Anschluß mit externen Programmiergeräten verbindbar. Statt des externen Programmiergerätes kann auch an den Diagnoseanschluß des Kraftfahrzeuges ein externes Testgerät angeschlossen werden.

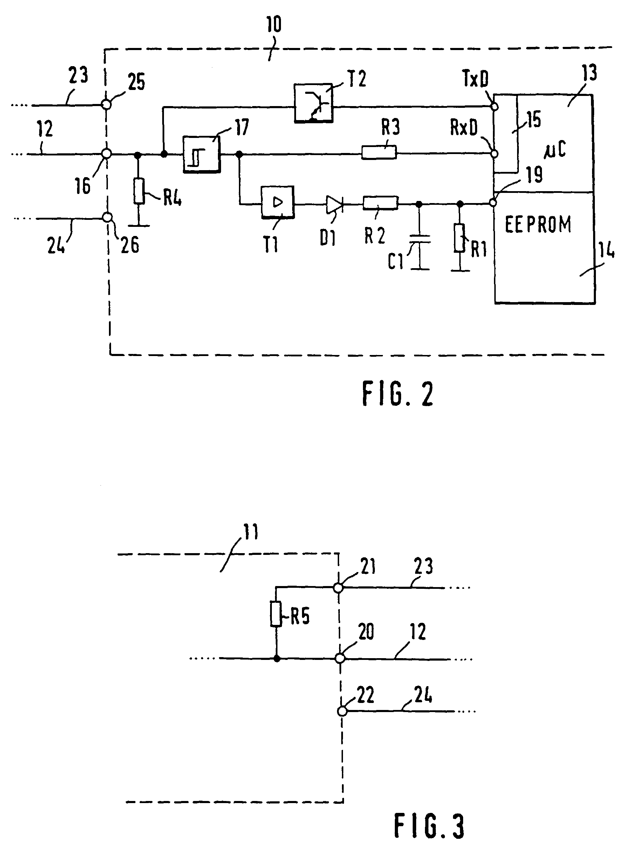

Figur 2 zeigt mit der Bezugszahl 13 den Mikrorechner des Steuergerätes 10. Dieser enthält eine serielle Schnittstelle 15. Auf dem Mikrorechner integriert oder separat zum Mikrorechner ausgeführt ist ein nichtflüchtiger, programmierbarer Speicher 14 vorgesehen. Der nichtflüchtige Speicher 14 ist insbesondere als Flash-EPROM ausgeführt. Zur Programmierung des nichtflüchtigen Speichers 14 muß ein Freigabesignal an den nichtflüchtigen Speicher 14 angelegt werden. In dem hier dargestellten Ausführungsbeispiel ist der nichtflüchtige Speicher 14 so ausgebildet, daß er mit einer Programmierspannung von 5V auskommt. Diese Spannung kann im Steuergerät einfach erzeugt sein oder auch von außen auf das Steuergerät aufgeprägt sein. Weitere Komponenten des Steuergerätes bzw. des Mikrorechners 13, wie Ein-/Ausgabeschaltkreise und RAM-Speicher sind der Einfachheit halber nicht einzeln dargestellt. An den RXD-Eingang der seriellen Schnittstelle 15 des Mikrorechners 13 ist ein Widerstand R3 angeschlossen. Der Widerstand R3 steht mit einem Schmitt-Trigger 17 in Verbindung. Eingangsseitig ist der Schmitt-Trigger 17 mit der Übertragungsleitung 12 verbunden. Dabei kann die Übertragungsleitung 12 entweder fest an den Eingang des Steuergerätes 16 angeschlossen sein und dann zu einem separaten Diagnoseanschluß innerhalb des Kraftfahrzeuges führen oder sie kann auch über eine Steckverbindung mit dem Eingangs-Pin 16 des Steuergerätes verbunden werden. Zum Anschluß des Steuergerätes 10 an ein externes Programmiergerät sind noch die Verbindungsleitungen 23 und 24 dargestellt. Über die Verbindungsleitung 23 wird die Batteriespannung des Steuergerätes zum externen Programmiergerät 11 übertragen. Über die Verbindungsleitung 24 wird der Masseanschluß des Programmiergerätes 11 mit dem Masseanschluß des Steuergerätes 10 verbunden. Auch diese Verbindungen können steckbar sein. Es können aber auch diese Verbindungen fest am Steuergerät anliegen und zu einem separaten Diagnoseanschluß im Kraftfahrzeug geführt sein, wobei dann der Anschluß des externen Programmiergerätes 11 über eine Steckverbindung bei dem separaten Diagnoseanschluß stattfindet.

Intern im Steuergerät 10 ist die serielle Übertragungsleitung 12 über den Eingangs-Pin 16, wie schon beschrieben, an den RXD-Eingang des Mikrorechners geführt. Dabei ist ein Eingangswiderstand R4 von der Übertragungsleitung 12 nach Masse geschaltet. Zur Auskopplung des Programmierfreigabe-Signals über die serielle Übertragungsleitung 12 ist hinter dem Schmitt-Trigger 17 eine Treiberstufe T1 angeschlossen. Der Ausgang der Treiberstufe T1 steht mit einer Diode D1 in Verbindung. Die Diode D1 ist in Durchlaßrichtung an die Treiberstufe T1 geschaltet. Nach der Diode D1 folgt ein Widerstand R2. Von dem Widerstand R2 geht dann eine direkte Verbindung zum Programmierfreigabe-Eingang 19 des nichtflüchtigen Speichers 14. An die Verbindungsleitung vom Widerstand R2 zum Programmierfreigabe-Eingang 19 ist ein Kondensator C1 angeschlossen. Parallel zum Kondensator C1 ist ein weiterer Widerstand R1 nach Masse geschaltet.An den TXD-Eingang der seriellen Schnittstelle 15 des Mikrorechners 13 ist eine Treiberstufe T2 angeschlossen. Somit dient die Übertragungsleitung 12 sowohl zur Übertragung von Daten vom externen Programmiergerät 11 zum Steuergerät 10 als auch zur Übertragung von Daten vom Steuergerät 10 zum externen Programmiergerät 11.

In der Figur 3 ist dargestellt, daß an die Übertragungsleitung 12 intern im Programmiergerät 11 ein Widerstand R5 angeschlossen ist, der andererseits auch mit der Übertragungsleitung 23 für die Batteriespannung des Steuergerätes 10 in Verbindung steht. Die Verbindungsleitungen 23, 24 und 12 sind ebenfalls lösbar mit dem Programmiergerät 11 verknüpft. Dies wird durch die Eingangs-Pins 21, 20 und 22 angedeutet. Weitere Komponenten des Programmiergerätes 11, wie z.B. serielle Schnittstelle, Mikrorechner, Speicher, etc. sind der Einfachheit halber im einzelnen nicht dargestellt.

Im folgenden soll die Wirkungsweise der Schaltungsanordnung näher beschrieben werden. Solange das Steuergerät 10 noch nicht an das externe Programmiergerät angeschlossen ist, liegt an dem Eingangs-Pin 16 des Steuergerätes Low-Potential an. Dieses deshalb, weil die entsprechende Anschlußleitung über den Widerstand R4 (Pull-Down-Widerstand) mit der Masse des Steuergerätes verbunden ist. Somit liegt auch am RXD-Eingang und auch am Programmierfreigabe-Eingang 19 des nichtflüchtigen Speichers 14 Low-Potential an. Selbst wenn der Kondensator C1 zuvor noch aufgeladen war, wird er sich nach einer kurzen Zeit über den Widerstand R1 entladen. Durch den Eingangswiderstand R4 ist also gewährleistet, daß während des Normalbetriebes des Fahrzeuges kein High-Potential an dem Programmierfreigabe-Eingang 19 anliegen kann. Somit kann während des Normalbetriebes des Fahrzeuges der nichtflüchtige Speicher garnicht programmiert werden. Es ist dadurch gewährleistet, daß auch bei einem fehlerhaften Programmablauf (bedingt z.B. durch eine elektromagnetische Störstrahlung) der nichtflüchtige Speicher 14 nicht programmiert werden kann. Sobald das externe Programmiergerät 11 an das Steuergerät 10 angeschlossen ist, wird über den Widerstand R5 (Pull-Up-Widerstand) High-Potential an die serielle Übertragungsleitung 12 gelegt. Dies führt dazu, daß auch der Kondensator C1 über den Widerstand R2 aufgeladen wird. Nachdem der Kondensator C1 aufgeladen ist, liegt also an dem Programmierfreigabe-Eingang 19 High-Potential an und der nichtflüchtige Speicher 14 ist für die Programmierung entriegelt. Zum Start der Programmierung muß von dem Programmiergerät 11 ein entsprechender Steuerbefehl zu dem Mikrorechner 13 des Steuergerätes übertragen werden.

Die Übertragung von Daten zwischen Steuergerät und externem Programmiergerät findet in Form einzelner Datenworte statt. Ein Datenwort besteht z.B. aus einem Start-Bit, acht Daten-Bits und einem Stopp-Bit. Die typische Übertragungsrate für die Kommunikation zwischen externem Programmiergerät und Steuergerät beträgt ca. 10 kBaud. Bei dieser Übertragungsrate beträgt eine Bitzeit also 100 Mikrosekunden. Bei der Übertragung eines Low-Bits wird die übertragungsleitung 12 also für ca. 100 Mikrosekunden mit einem Low-Pegel belegt. Bei der Übertragung eines High-Bits wird die übertragungsleitung 12 entsprechend für 100 Mikrosekunden mit einem High-Pegel belegt. Es findet also ein hochfrequenter Wechsel von High- und Low-Pegeln auf der Übertragungsleitung 12 statt.

Der Schmitt-Trigger 17 dient zur Signalaufbereitung der ankommenden Signale. Während der Übertragung jedes Low-Pegels über die Übertragungsleitung 12 kann sich der Kondensator C1 über den Widerstand R1 entladen. Die Zeitkonstante des RC-Gliedes C1, R1 ist deshalb so gewählt, daß der Kondensator C1 sich während der Übertragung einzelner Low-Pegel nur unwesentlich entladen kann. Der Extremfall wäre, daß ein einzelnes Datenwort aus acht Low-Bits besteht. In diesem Fall würde also während einer Zeit von grob 1 Millisekunde der Kondensator C1 entladen. Die Zeitkonstante des RC-Gliedes C1, R1 ist dann aber so dimensioniert, daß auch in einem solchen Fall noch High-Pegel am Pogrammier-Freigabeeingang 19 anliegt. Der Widerstand R2 ist so gewählt, daß der Kondensator C1 während der Zeit zwischen der Übertragung zweier Datenworte, an der ja High-Potential an der Übertragungsleitung 12 anliegt, vollgeladen werden kann. Die Treiberstufe T1 dient zur Entlastung der Ausgangsstufe des Schmitt-Triggers 17. Außerdem bewirkt sie eine Entkopplung des Ausgangssignals des Schmitt-Triggers 17 von den sukzessiven Nachladevorgängen des Kondensators C1.

Bei der Übertragung von Datenworten vom Steuergerät 10 zum externen Programmiergerät 11 steuert die serielle Schnittstelle 15 über den TXD-Ausgang die Treiberstufe T2 an. Über die Treiberstufe T2, die einen offenen Kollektor aufweist, wird die Übertragungsleitung 12 sukzessive nach Low-Potential gezogen. Das Vorsehen der Treiberstufe T2 mit offenem Kollektor ist deswegen von Vorteil, weil dadurch das Steuergerät 10 selber nicht die Anschlußleitung am Eingangs-Pin 16 auf High-Potential legen kann, wenn kein externes Programmiergerät 11 angeschlossen ist.

Es gibt vielfältige Abwandlungsmöglichkeiten der beschriebenen Erfindung. So ist es z.B. vom Datenübertragungsprotokoll abhängig, ob intern im Steuergerät 10 ein Widerstand R4 (Pull-Down-Widerstand) gegen Masse geschaltet ist, oder ob andererseits ein Widerstand (Pull-Up-Widerstand) gegen die Batteriespannung des Steuergerätes geschaltet ist. Das Ruhepotential auf der Übertragungsleitung 12 würde High-Pegel entsprechen. Die Treiberstufe T1 des Steuergerätes 10 müßte dann invertierend ausgelegt sein, um eine unabsichtliche Entriegelung des nichtflüchtigen Speichers 14 zu verhindern.

Es ist als weitere Ausführung denkbar, daß das Programmierfreigabe-Signal nicht direkt auf einen Eingang 19 des nichtflüchtigen Speichers 14 geführt ist, sondern auf einen separaten Baustein geführt ist, der daraufhin die Programmierspannung für den nichtflüchtigen Speicher 14 erzeugt. Ein derartiger Baustein kann z.B. eine Ladungspumpe sein, die dann die Programmierspannung (5 V oder 12 V) erzeugt.

Weitere Abwandlungsmöglichkeiten sind denkbar. So wäre es z.B. auch möglich, daß im Kraftfahrzeug mehrere Steuergeräte eingebaut sind, die alle über eine gemeinsame serielle Übertragungsleitung ansprechbar sind. In diesem Fall würden bei Anschluß des externen Programmiergerätes die nichtflüchtigen Speicher in den einzelnen Steuergeräten alle gemeinsam entriegelt. Eine Programmierung der einzelnen Speicher müßte dann nacheinander mit entsprechenden unterschiedlichen Steuerbefehlen erfolgen.

Das externe Programmiergerät kann z.B. auch ein Personal-Computer sein. Auch der Einsatz separater Übertragungsleitungen für die Übertragung vom Steuergerät zum externen Programmiergerät und vom externen Programmiergerät zum Steuergerät wäre möglich.

## Patentansprüche

**1.** Steuergerät (10), insbesondere Kraftfahrzeug-Steuergerät, mit einem Mikrorechner (13), mit einem programmierbaren, nichtflüchtigen Speicher (14), mit einer seriellen Schnittstelle, an die mindestens eine serielle Datenübertragungsleitung (12) anschließbar ist, wobei das Steuergerät (10) zur Programmierung des nichtflüchtigen Speichers (14) die zu programmierenden Daten über die serielle Datenübertragungsleitung (12) von einem anschließbaren externen Programmiergerät (11) empfängt, dadurch gekennzeichnet, daß ein Tiefpass vorgesehen ist, der an einem Anschluß für die serielle Übertragungsleitung (12) angeschlossen ist, wobei der Tiefpass ein Signal für die Freigabe der Programmierung erzeugt, wenn bei angeschlossenen externen Programmiergerät (11) Signale auf der Übertragungleitung (12) vorliegen.

**2.** Steuergerät nach Anspruch 1, dadurch gekennzeichnet, daß das Signal für die Freigabe der Programmierung an den Mikrorechner angelegt wird.

**2.** Steuergerät nach Anspruch 1, dadurch gekennzeichnet, daß das Signal für die Freigabe der Programmierung an einen Freigabeeingang des programmierbaren, nichtflüchtigen Speichers angelegt wird.

**4.** Steuergerät nach einem der vorhergehenden Ansprüche, dadurch gekennzeichnet, daß das Signal für die Programmierfreigabe an eine Ladungspumpe angelegt wird, die eine Programmierspannung an den programmierbaren, nichtflüchtigen Speicher abgibt.

**5.** Steuergerät nach einem der vorhergehenden Ansprüche, dadurch gekennzeichnet, daß als Tiefpaß ein Widerstand (R2) an den Anschluß (16) für die serielle Übertragungsleitung (12) geschaltet ist, daß nach dem Widerstand (R2) ein Kondensator (C1) gegen Masse geschaltet ist.

**6.** Steuergerät nach Anspruch 5, dadurch gekennzeichnet, daß zwischen den Kondensator (C1) und dem Programmierfreigabe-Eingang (19) ein Widerstand (R1) gegen Masse geschaltet ist.

**7.** Steuergerät nach einem der vorhergehenden Ansprüche, dadurch gekennzeichnet, daß an den Anschluß (16) für die Übertragungsleitung (12) intern im Steuergerät (10) ein Eingangswiderstand (R4) gegen Masse geschaltet ist.

**8.** Steuergerät nach einem der Ansprüche 5 bis 7, dadurch gekennzeichnet, daß die Zeitkonstante des RC-Gliedes (R1, C1) so groß gewählt ist, daß während der Übertragung eines Datenwortes der Kondensator (C1) nicht so weit entladen wird, daß das Signal für die Programmierfreigabe unter einen vorbestimmten Minimalwert absinkt.

**9.** Steuergerät nach einem der Ansprüche 5 bis 8, dadurch gekennzeichnet, daß der Widerstand (R2) so klein gewählt wird, daß der Kondensator (C1) in den zur Verfügung stehenden Phasen zwischen den Übertragungen zweier aufeinanderfolgender Datenworte vollgeladen wird.

**10.** Steuergerät nach einem der vorhergehenden Ansprüche, dadurch gekennzeichnet, daß an die Übertragungsleitung (12) ein Schmitt-Trigger (17) angeschlossen ist, der eine Signalaufbereitung der über die Übertragungsleitung (12) empfangenen Signale durchführt.

**11.** Steuergerät nach einem der Ansprüche 5 bis 10, dadurch gekennzeichnet, daß vor dem Widerstand (R2) eine Treiberstufe (T1) geschaltet ist.

**12.** Steuergerät nach Anspruch 10 oder 11, dadurch gekennzeichnet, daß zwischen Schmitt-Trigger (17) und dem Empfangs-Eingang (RXD) des Mikrorechners (13) im Steuergerät (10) ein Widerstand (R3) geschaltet ist.

**13.** Programmiergerät zur Programmierung eines nichtflüchtigen Speichers in einem einen Mikrorechner aufweisenden Steuergerät, insbesondere Kraftfahrzeug-Steuergerät, wobei das Steurgerät (10) eine serielle Schnittstelle aufweist, an die mindestens eine serielle Datenübertragungsleitung (12) anschließbar ist, wobei das Steuergerät (10) zur Programmierung des nichtflüchtigen Speichers (14) die zu programmierenden Daten über die serielle Datenübertragungsleitung (12) vom Programmiergerät (11) empfängt, dadurch gekennzeichnet, daß im Steuergerät ein Tiefpass vorgesehen ist, der an einem Anschluß für die serielle Übertragungsleitung (12) angeschlossen ist, wobei der Tiefpass ein Signal für die Freigabe der Programmierung erzeugt, wenn Signale auf der Übertragungleitung (12) vorliegen, und daß intern im Programmiergerät Mittel vorhanden sind, die als Ruhepotential an die serielle Übertragungsleitung ein High-Potential anlegen.

**14.** Vorrichtung nach Anspruch 13, dadurch gekennzeichnet, daß als Mittel zur Anlegung des High-Potentials an die Übertragungsleitung (12) intern im Programmiergerät (11) ein Widerstand (R5) gegen die Versorgungsspannung geschaltet ist.

## Claims

1. Control unit (10), in particular motor vehicle control unit, having a microcomputer (13), having a programmable, non-volatile memory (14), having a serial interface to which at least one serial data transmission line (12) can be connected, the control unit (10), for the programming of the non-volatile memory (14), receiving the data to be programmed via the serial data transmission line (12) from an external programming unit (11) that can be connected, characterized in that a low-pass filter is provided, which is connected to a terminal for the serial transmission line (12), the low-pass filter generating a signal for enabling the programming if signals are present on the transmission line (12) when the external programming unit (11) is connected.

2. Control unit according to Claim 1, characterized in that the signal for enabling the programming is applied to the microcomputer.

3. Control unit according to Claim 1, characterized in that the signal for enabling the programming is applied to an enable input of the programmable, non-volatile memory.

4. Control unit according to one of the preceding claims, characterized in that the signal for enabling the programming is applied to a charge pump, which outputs a programming voltage to the programmable, non-volatile memory.

5. Control unit according to one of the preceding claims, characterized in that, as the low-pass filter, a resistor (R2) is connected to the terminal (16) for the serial transmission line (12), in that a capacitor (C1) is connected, with respect to earth, downstream of the resistor (R2).

6. Control unit according to Claim 5, characterized in that a resistor (R1) is connected, with respect to earth, between the capacitor (C1) and the programming enable input (19).

7. Control unit according to one of the preceding claims, characterized in that an input resistor (R4) is connected, with respect to earth, to the terminal (16) for the transmission line (12) internally in the control unit (10).

8. Control unit according to one of Claims 5 to 7, characterized in that the time constant of the RC element (R1, C1) is chosen to be large enough that, during the transmission of a data word, the capacitor (C1) is not discharged to an extent such that the signal for enabling the programming falls below a predetermined minimum value.

9. Control unit according to one of Claims 5 to 8, characterized in that the resistor (R2) is chosen to be small enough that the capacitor (C1) is fully charged in the available phases between the transmissions of two successive data words.

10. Control unit according to one of the preceding claims, characterized in that a Schmitt trigger (17) is connected to the transmission line (12) and carries out signal conditioning of the signals received via the transmission line (12).

11. Control unit according to one of Claims 5 to 10, characterized in that a driver stage (T1) is connected upstream of the resistor (R2).

12. Control unit according to Claim 10 or 11, characterized in that a resistor (R3) is connected between a Schmitt trigger (17) and the receive input (RXD) of the microcomputer (13) in the control unit (10).

13. Programming unit for programming a non-volatile memory in a control unit having a microcomputer, in particular a motor vehicle control unit, the control unit (10) having a serial interface to which at least one serial data transmission line (12) can be connected, the control unit (10), for the programming of the non-volatile memory (14), receiving the data to be programmed via the serial data transmission line (12) from the programming unit (11), characterized in that a low-pass filter is provided in the control unit, which filter is connected to a terminal for the serial transmission line (12), the low-pass filter generating a signal for enabling the programming if signals are present on the transmission line (12), and in that means which apply a high potential as quiescent potential to the serial transmission line are present internally in the programming unit.

14. Device according to Claim 13, characterized in that, as means for applying the high potential to the transmission line (12), internally in the programming unit (11), a resistor (R5) is connected with respect to the supply voltage.

## Revendications

1. Appareil de commande (10) notamment appareil de commande de véhicule automobile, comportant un microcalculateur (13), une mémoire programmable non fugitive (14), une interface série à laquelle peut être reliée au moins une ligne de transmission de données série (12),
l'appareil de commande (10) recevant les données à programmer pour la programmation de la mémoire non fugitive (14), , par l'intermédiaire de la ligne de transmission de données série (12) à partir d'un appareil de programmation externe (11), raccordé,
caractérisé par
- un filtre passe-bas relié à un branchement de la ligne de transmission série (12),
- le filtre passe-bas générant un signal pour libérer la programmation, s'il y a des signaux sur la ligne de transmission (12), lorsqu'un appareil de programmation (11) externe est raccordé.

2. Appareil de commande selon la revendication 1,
caractérisé en ce que
le signal de libération de la programmation est appliqué au microcalculateur.

3. Appareil de commande selon la revendication 1,
caractérisé en ce que
le signal de libération de la programmation est appliqué à une entrée de libération de la mémoire programmable non fugitive.

4. Appareil de commande selon l'une des revendications précédentes,
caractérisé en ce que
le signal pour la libération de la programmation est appliqué à une lampe à décharge qui fournit une tension de programmation à la mémoire programmable non fugitive.

5. Appareil de commande selon l'une des revendications précédentes,
caractérisé en ce que
comme filtre passe-bas, une résistance (R2) est reliée à la borne de branchement (16) de la ligne de transmission série (12), et en aval de la résistance (R2), un condensateur (C1) est relié à la masse.

6. Appareil de commande selon la revendication 5,
caractérisé par
une résistance (R1) entre le condensateur (C1) et l'entrée de libération de programmation (19), cette résistance étant reliée à la masse.

7. Appareil de commande selon l'une des revendications précédentes,
caractérisé par
une résistance d'entrée (R4) reliée à la masse, au joint de raccordement (16) de la ligne de transmission (12), de manière interne à l'appareil de commande (10).

8. Appareil de commande selon l'une des revendications 5 à 7,
caractérisé en ce que
la constante de temps de l'élément RC (R1, C1) est choisie suffisamment grande pour que, pendant la transmission d'un mot de données, le condensateur (C1) ne se décharge pas à un point tel que le signal de libération de programmation descende en dessous d'une valeur minimale prédéterminée.

9. Appareil de commande selon l'une des revendications 5 à 8,
caractérisé en ce que
la résistance (R2) est choisie suffisamment faible pour que le condensateur (C1) se charge complètement dans les phases disponibles entre les transmissions de deux mots de données successifs.

10. Appareil de commande selon l'une des revendications précédentes
caractérisé par
un déclencheur de Schmitt (17) relié à la ligne de transmission (12) qui prépare les signaux reçus par la ligne de transmission (12).

11. Appareil de commande selon l'une des revendications 5 à 10,
caractérisé par
un étage pilote (T1) en amont de la résistance (R2).

12. Appareil selon l'une des revendications 10 ou 11,
caractérisé par
une résistance (R3) branché entre le déclencheur de Schmitt (17) et l'entrée de réception (RXD) du microcalculateur (13) dans l'appareil de commande (10).

13. Appareil de programmation pour programmer une mémoire non fugitive d'un appareil de commande, équipé d'un micro-calculateur, notamment d'un appareil de commande de véhicule automobile,
- l'appareil de commande (10) ayant une interface série à laquelle peut être reliée au moins une ligne de transmission de données série (12)
- l'appareil de commande (10) recevant pour la programmation de la mémoire non fugitive (14), les données à programmer par l'intermédiaire de la ligne de transmission de données 12 série à partir de l'appareil de programmation (11),
caractérisé par
- un filtre passe-bas dans l'appareil de commande qui est relié à un branchement d'une ligne de transmission série (12),
- le filtre passe-bas générant un signal pour libérer la programmation en présence de signaux sur la ligne de transmission (12), et
- l'appareil de programmation comportant de manière interne des moyens qui appliquent un potentiel haut comme potentiel de repos à la ligne de transmission série.

14. Dispositif selon la revendication 13,
caractérisé par
une résistance (R5) reliée à la tension d'alimentation et constituant un moyen pour appliquer le potentiel haut à la ligne de transmission (12) de manière interne à l'appareil de programmation (11).
